# FASCICULE DE BREVET EUROPEEN

(11) **EP 2 587 923 B1**
(45) Date de publication et mention de la délivrance du brevet: **09.04.2014**
(21) Numéro de dépôt: 11741626.3
(22) Date de dépôt: 01.07.2011
(51) Int. Cl.: A01N 65/08, A01N 65/03, C05F 5/00, C05F 11/00, C05G 3/00, A01P 21/00

(54) **UTILISATION D'UN EXTRAIT NATUREL DE MARC DE RAISIN POUR FAVORISER LA CROISSANCE DE PLANTES**
VERWENDUNG EINES NATÜRLICHEN EXTRAKTS AUS TREBER ZUR FÖRDERUNG VON PFLANZENWACHSTUM
USE OF A NATURAL EXTRACT OF GRAPE MARC FOR PROMOTING PLANT GROWTH

(30) Priorité: 02.07.2010 FR 1055398
(43) Date de publication de la demande: 08.05.2013
(73) Titulaire: Laboratoires Goëmar, 35419 Saint Malo Cedex (FR)
(72) Inventeur: BORDIER, Adeline, F-29250 Saint Pol de Léon (FR)
(74) Mandataire: Cabinet Plasseraud
(86) Numéro de dépôt international: PCT/FR2011/051546
(87) Numéro de publication internationale: WO 2012/001327

(56) Documents cités:
- DD-A5- 294 169
- S. Ntougias et al.: "Monitoring the composting process of different agricultural wastes and evaluation of the effects of the final products on plants" In: "8th International Conference on Environmental Science and Technology", 2003, XP002621148, pages 666-673, abrégé Titre 2.4; page 668 page 671, alinéa 3; figure 3
- E. ERHART ET AL.: "Suppression of Pythium ultimum by biowaste compost in relation to compost microbial biomass, activity and content of phenolic compounds", J. PHYTOPATHOLOGY, vol. 147, 1999, pages 299-305, XP002621149,
- SARIKA SHRIVASTAVA, MEENAKSHI BANERJEE: "Algal filtrate: a low cost substitute to synthetic growth regulators for direce organogenesis of embryo culture in Jatropha curcas (Ratanjyot)", ACTA PHYSIOL PLANT, vol. 31, 2009, pages 1205-1212, XP002621150,

## Description

L'augmentation des rendements est au coeur des préoccupations des agriculteurs. Or, le rendement dépend grandement du bon développement de la plante et par conséquent de sa croissance, ainsi que de sa bonne santé.

La croissance des plantes est directement liée à l'absorption et à l'assimilation d'éléments minéraux ainsi qu'aux flux hormonaux régissant l'allongement et la différenciation des tissus végétaux. Par conséquent, les nutriments et hormones jouent un rôle essentiel dans la croissance des plantes. Du fait de leur incapacité à se déplacer, les plantes ont mis en place des mécanismes actifs et activables leur permettant d'utiliser au mieux les ressources présentes pour favoriser leur croissance. Afin d'augmenter cette croissance, des engrais sont utilisés. Il est également possible d'utiliser d'autres molécules, souvent glucidiques, extraites d'algues pour favoriser la croissance. S. Ntougias et al. in 8th International conference on Environmental science and technology, 2003 pp666-673, et E. Erhart et al. in J.Phytopathology, vol.147, 1999, pp.299-305, ont travaillé sur l'utilisation de composts, c'est-à-dire de déchets végétaux biodégradés pour favoriser la croissance de plantes.

Il existe donc un besoin en une composition respectueuse de l'environnement et respectueuse des plantes auxquelles elle est destinée, qui favorise la croissance des plantes. Les présents inventeurs ont trouvé qu'un extrait naturel de marc de raisin présentait une telle activité. L'extrait proposé a donc la capacité à activer la croissance de plantes traitées.

Ainsi, l'invention porte sur l'utilisation d'un extrait de marc de raisin comprenant plus de 45% en poids de polyphénols et plus de 0,5% en poids d'anthocyanes, pour favoriser la croissance de plantes. Le marc de raisin est constitué de la partie solide résultant du pressage des grains de raisin, c'est-à-dire des pellicules, pépins et éventuellement rafle. Le marc de raisin résulte donc de la transformation physique des grains de raisin. L'extrait de marc de raisin n'a pas subi de compostage.

L'extrait de marc de raisin dont l'utilisation est proposée permet d'accroître de manière conséquente la masse pondérale des parties aériennes et racinaires des plantes et d'augmenter de façon conséquente la teneur en chlorophylles des plantes indiquant une meilleure assimilation des éléments disponibles. L'extrait de marc de raisin dont l'utilisation est proposée active donc la croissance des plantes traitées.

Selon un mode de réalisation, l'extrait de marc de raisin dont l'utilisation fait l'objet de la présente invention comprend des composés naturels synthétisés par le raisin lui-même dont la culture est largement répandue et obtenus par un procédé traditionnel (non industriel). Ces composés ont donc beaucoup plus de chance d'être bien tolérés et de présenter des effets non toxiques. Ces composés naturels peuvent enfin être utilisés en agriculture biologique.

Ces composés naturels sont notamment des polyphénols et des anthocyanes. L'extrait utilisé selon l'invention contient plus de 45%, de préférence plus de 70% en poids par rapport à son poids sec de polyphénols. L'extrait contient également plus de 0,5%, de préférence plus de 8% en poids d'anthocyanes par rapport au poids sec de l'extrait.

L'extrait de marc de raisin utilisé selon l'invention peut être préparé à partir de marc rouge auquel on ajoute de l'eau et on fait subir une centrifugation, le produit de la centrifugation est ensuite soumis à une extraction dans un mélange eau-éthanol comprenant moins de 30% v/v d'éthanol, puis est concentré sous vide et atomisé sans support de séchage, de façon à obtenir une poudre. Le procédé est conduit en présence de SO₂, sans ajout d'aucun additif. Le sulfite ajouté dans l'eau de diffusion, à hauteur d'environ 1g/l a pour rôle de solubiliser les anthocyanes et limiter leur oxydation.

Les composés naturels présents dans l'extrait de marc de raisin sont des composés faciles à extraire, peu couteux, hydrosolubles donc faciles d'emploi (dilution aisée), présentables de part la coloration des pigments anthocyaniques. Ils peuvent améliorer la présentation d'un produit pesticide et les propriétés des formulants accompagnant les matières actives de part leur rôle photoprotecteur.

L'utilisation selon l'invention est tout à fait appropriée pour les plantes choisies dans le groupe comprenant les plantes agronomiquement utiles et les plantes ornementales.

Les plantes agronomomiquement utiles sont des angiospermes choisies dans le groupe comprenant les Apiacées, les Astéracées, les Brassicacées, les Chénopodiacées, les Convolvulacées, les Cucurbitacées, les Fabacées, les Liliacées, les Polygonacées, les Rosacées, les Solanacées, les Poacées, les Vitacées.

L'invention porte également sur un procédé pour favoriser la croissance des plantes qui comprend l'application d'une composition comprenant un extrait de marc de raisin sur lesdites plantes.

La composition mise en oeuvre dans le procédé selon l'invention comprend comme produit actif un extrait hydroalcoolique de marc de raisin. L'extrait de marc de raisin comprend plus de 45%, de préférence plus de 70% en poids de polyphénols par rapport au poids sec de l'extrait.

L'extrait comprend plus de 0,5%, de préférence plus de 8% en poids d'anthocyanes par rapport au poids sec de l'extrait. L'extrait de marc de raisin est avantageusement obtenu selon le procédé décrit précédemment.

La composition mise en oeuvre dans le procédé selon l'invention peut se présenter sous forme de poudre ou sous forme liquide.

Lorsque la composition se présente sous la forme de poudre, elle est dépourvue de tout autre agent actif.

Elle est également dépourvue de tout adjuvant non naturel. Selon un mode de réalisation particulier, la composition mise en oeuvre dans le procédé selon l'invention comprend l'extrait de marc de raisin et de l'eau et est dépourvue d'agent stabilisant.

Selon un autre mode de réalisation, la compositon mise en oeuvre dans le procédé destiné à favoriser la croissance des plantes selon l'invention, comprend en combinaison avec l'extrait de marc de raisin un filtrat d'algues.

Selon un mode de réalisation particulier du procédé selon l'invention, la composition est une composition aqueuse qui est appliquée par pulvérisation foliaire ou par infiltration.

La concentration en extrait de marc de raisin dans la composition mise en oeuvre dans le procédé selon l'invention est comprise entre 0,05 g/L et 3 g/L, de préférence entre 0,1 g/L et 0,5 g/L, plus préférentiellement encore entre 0,375 g/L et 0,4 g/L, pour une application foliaire en vue d'améliorer la croissance des plantes. Les pulvérisations peuvent être réalisées tout au long de la croissance de la plante, au moins une fois par semaine, de préférence de deux à trois fois par semaine.

La composition est appliquée à raison de 0,05 à 3,0 kg/ha, de préférence de 0,5 à 2,0 kg/ha de cultures à traiter.

Les doses d'application et les modalités d'application dépendent bien entendu de l'espèce de plantes à traiter, et de son stade de développement.

Le procédé selon l'invention peut être mis en oeuvre sur des plantes agronomiquement utiles et les plantes ornementales. De telles plantes sont celles mentionnées ci-dessus en lien avec l'utilisation.

Des résultats tout à fait intéressants ont été démontré sur des plants de tomates cultivés en serre suite à des applications foliaires répétées, ceci dès 0,375g/L. On a observé une augmentation significative de la croissance pondérale (en matière sèche) des parties aériennes et racinaires des plants de tomate traités avec l'extrait par rapport aux plants témoins (traités avec de l'eau ultra pure). Les teneurs en chlorophylles a, b et totales (mesurées par spectrophotométrie) des plants traités avec l'extrait sont elles aussi significativement supérieures à celles des plants traités avec de l'eau, signe d'une meilleure assimilation des éléments nutritifs. L'élévation des teneurs en chlorophylles traduit une amélioration de l'activité photosynthétique se traduisant par une augmentation de la croissance générale, ce qui démontre la capacité de l'extrait de marc de raisin à activer la croissance des plantes traitées.

L'utilisation de cet extrait permettra la diminution de la quantité des matières fertilisantes permettant l'augmentation des rendements. En culture biologique, l'utilisation de cet extrait permettra la disparition partielle ou totale des engrais ou matières fertilisantes chimiques

L'invention va être décrite de façon plus détaillée ci-dessous à l'aide des exemples suivants qui sont donnés à titre d'illustration uniquement.

### EXEMPLES

Dans les exemples suivants, on utilise comme extrait de marc de raisin, le produit commercialisé par la société GRAP'SUD sous la marque exGrape® Anthocyanins. Ce produit présente les caractéristiques suivantes :
- poudre légèrement granulée rouge foncé
- polyphénols totaux :
   (en équivalent catéchine) DO 280 nm : ≥ 70% (en équivalent acide gallique) FOLIN CIOCALTEU : ≥ 60%
- procyanidines :
   (en équivalent catéchine) Méthode de la vanilline: ≥ 5%
- anthocyanes :
   Décoloration au disulfite : ≥ 8%

Ce produit est appelé dans les exemples "EXTRAIT".

Dans les exemples, on utilise un filtrat d'algue qui a été débarrassé de la cellulose et des alginates insolubles.

### Exemple 1

Des graines de tomate Durinta sont semées dans du terreau, en serre. L'arrosage des plants est assuré trois fois par semaine avec de l'eau du réseau. La première pulvérisation est réalisée au stade 2 feuilles. Celle-ci est suivie de 3 autres pulvérisations à 2-3 jours d'intervalle. En tout, 4 pulvérisations successives sont donc effectuées sur 1 plant par modalité.

L'EXTRAIT est utilisé aux 3 doses suivantes, 1 g/L, 2 g/L et 3 g/L. On a utilisé l'eau comme témoin.

Les plants sont observés avant chaque pulvérisation dans le but d'identifier toute trace suspecte qui pourrait provenir de phytotoxicité.

Aucune trace de phytotoxicité n'est observée pour chacun des dosages.

### Exemple 2

L'essai de l'exemple 1 a été reproduit, en ne faisant qu'une seule pulvérisation, avec les concentrations suivantes d'EXTRAIT : 10 g/L, 20 g/L et 30 g/L et en utilisant un témoin positif, à savoir le filtrat d'algue issu de *Ascophylum nodosum,* qui favorise la croissance des plants, à une dilution de 100 et de 25.

Aucune trace de toxicité n'a été observée.

### Exemple 3

Des graines de tomate Durinta sont semées puis repiquées en perlite 15 jours plus tard. Les plants sont cultivés en serre tout au long de l'expérimentation et leur nutrition est assurée par arrosages successifs trois fois par semaine (lundi, mercredi et vendredi) avec une solution nutritive à 0,2 g/L.

Les traitements ont débuté dès le repiquage sur des plants au stade 2-3 feuilles. Les applications foliaires ont été faites 3 fois par semaine, l'eau purifiée milliQ servant de témoin. En tout, 14 applications ont été réalisées sur les 5 plants par modalité.

Modalités du test :
- Témoin eau
- Filtrat d'algue diluée 100 fois (FILTRAT dil 100)
- Filtrat d'algue diluée 25 fois (FILTRAT dil 25)
- EXTRAIT 1,5g/L
- EXTRAIT 3g/L

A la fin de l'expérience, les parties aériennes et racinaires sont prélevées, pesées séparément (matière fraîche, MF), séchées pendant 48h à 105°C et repesées séparément (matière sèche, MS).

### Résultats :

### 1- Effet sur l'aspect général des plants

Les plants sont récoltés lorsque des différences en termes de taille et de couleur (teneurs en chlorophylles) des plants sont clairement visibles, c'est-à-dire 65 jours après le semis, soit après 14 applications. Tout autre symptôme lié aux conditions de culture des plants est noté.

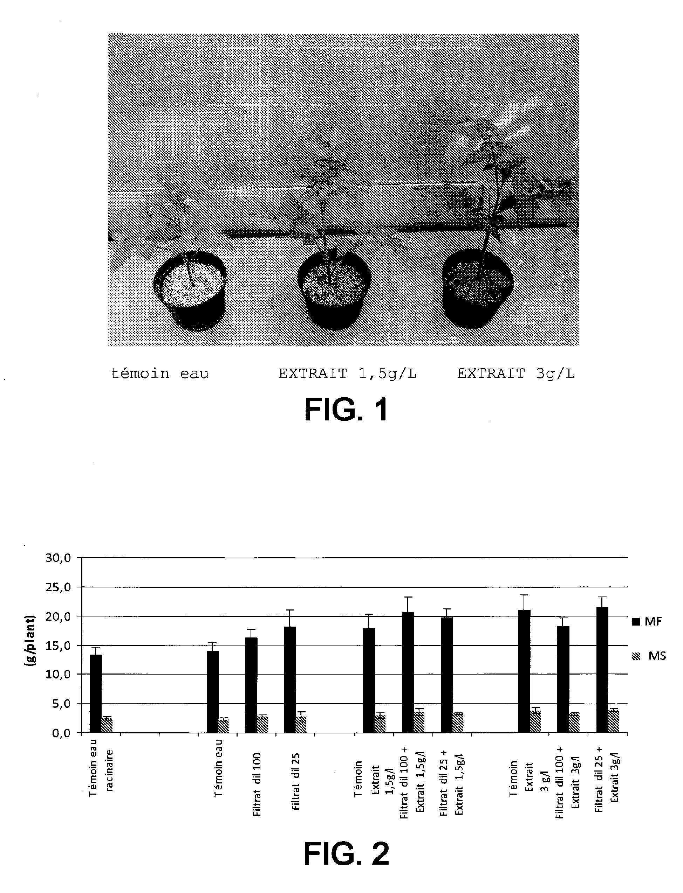

La photographie de la figure 1 illustre cet aspect des plants pour le témoin, l'EXTRAIT à 1,5g/L et 3g/L.

L'été étant une période propice à la croissance des plants, ils poussent plus rapidement. Une amélioration de la croissance des plants suite aux applications foliaires du filtrat d'algue et de l'EXTRAIT est observée. Ainsi, l'EXTRAIT est bien efficace pour améliorer la croissance des plants de tomates et aucun effet adverse n'est survenu lors de l'essai. D'autre part, les modalités traitées avec l'EXTRAIT sont remarquables par la teinte rouge de leurs feuilles.

### Effet sur la croissance pondérale des plants

A la fin de l'expérience, les parties aériennes et racinaires sont prélevées, pesées séparément (matière fraîche, MF), séchées pendant 48h à 105°C et repesées séparément (matière sèche, MS).

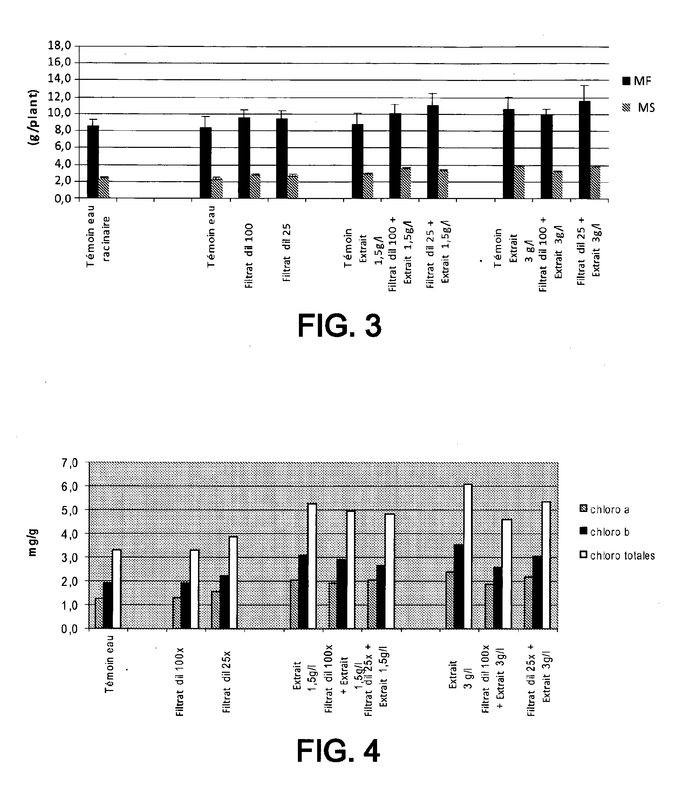

Les résultats présentés sur les diagrammes de la figure 2 (croissance de la partie aérienne) et de la figure 3 (croissance de la partie racinaire), indiquent que quelle que soit la modalité, la croissance des plants de tomates a été favorisée par rapport au témoin eau.

Les résultats obtenus avec l'EXTRAIT sont quant à eux inattendus puisqu'il s'avère qu'appliqué seul, il agit lui aussi sur la croissance des plants de tomate. Son efficacité est équivalente voir supérieure à celle du filtrat d'algue dilué à 25x, selon la dose considérée.

### 3- Effet sur les teneurs en chlorophylles des plants

Les prélèvements foliaires sont broyés dans de l'azote liquide puis dans une solution de tampon phosphate et l'on dose ensuite les chlorophylles a, b et totales dans de l'acétone à 80% v/v. Elles sont quantifiées au spectrophotomètre D0645nm, D0652nm et DO663 nm.

Les résultats sont présentés sur le diagramme de la figure 4.

De même que pour la croissance, une différence entre le témoin eau et les plants ayant reçu du filtrat d'algue 25 fois dilué est observée. De plus, cette augmentation est encore plus marquée pour les plants ayant reçu de l'EXTRAIT.

Cependant, il est préférable d'émettre une réserve sur les forts taux de chlorophylles obtenus pour les modalités ayant reçu de l'EXTRAIT. En effet, l'EXTRAIT étant rouge, il colore les feuilles. Nous pouvons donc supposer qu'il peut encore absorber aux longueurs d'onde d'absorption utilisées pour la mesure des chlorophylles, augmentant ainsi la valeur du dosage.

Les résultats ci-dessus démontrent l'effet de l'EXTRAIT sur la croissance des plants de tomate, que ce soit en termes de croissance pondérale ou de teneurs en chlorophylles.

### Exemple 4

Le test est similaire à celui mis en place à l'exemple 3 ci-dessus. Cependant, les applications foliaires et racinaires ont débuté au stade 3 feuilles bien développées et ceci 3 fois par semaine. L'application racinaire s'est arrêtée après 10 arrosages et l'application foliaire après 13 pulvérisations.

### Modalités du test :

- Témoin eau
- Filtrat d'algue dilution 25 fois
- EXTRAIT 0,375g/L
- EXTRAIT 0,75g/L
- Filtrat d'algue dilution 25 fois + EXTRAIT 0,375g/L
- Filtrat d'algue dilution 25 fois + EXTRAIT 0,75g/L

### Résultats :

### 1- Effet sur l'aspect général des plants

Les plants sont récoltés lorsque des différences en termes de taille et de couleur (teneurs en chlorophylles) des plants sont clairement visibles, c'est-à-dire 63 jours après le semis. Tout autre symptôme lié aux conditions de culture des plants est noté.

Les plants de tomates recevant le filtrat d'algues ou l'EXTRAIT en application foliaire semblent plus grands que les plants ayant reçu de l'eau. Cependant, il est difficile d'observer une différence nette entre les concentrations d'EXTRAITS testées.

De plus, une coloration rouge sur les feuilles de plants de tomate traités avec l'EXTRAIT est observée, bien qu'elle soit de moindre intensité que dans l'exemple 3 ci-dessus.

### 2- Effet sur la croissance pondérale des plants

Les parties aériennes et racinaires sont prélevées, pesées séparément (matière fraîche, MF), séchées pendant 48h à 105°C et repesées séparément (matière sèche, MS).

Un témoin filtrat d'algue utilisé en application racinaire a été inclus dans le test (résultats non présentés) afin de valider le test. Les résultats se sont avérés similaires à ceux généralement obtenus. Ainsi, les résultats obtenus en application foliaire peuvent être analysés.

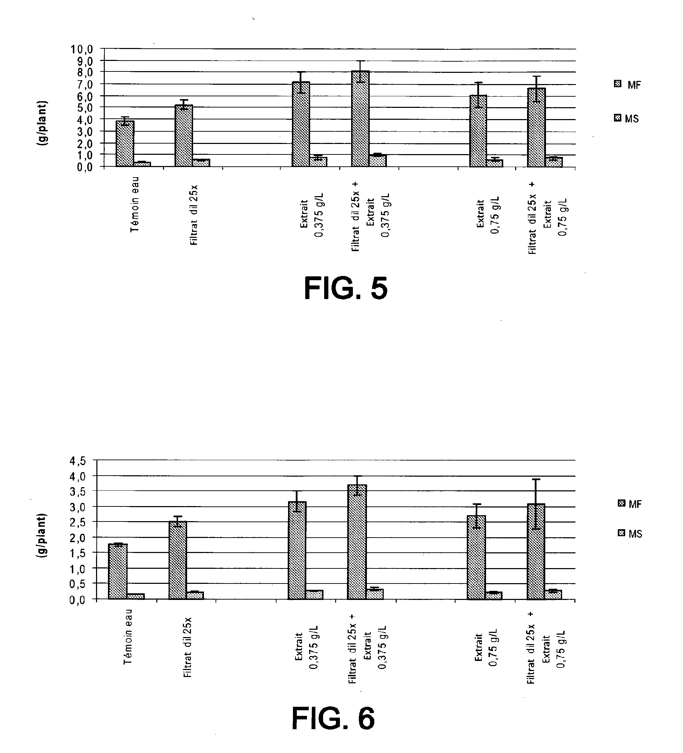

Les résultats présentés sur les diagrammes de la figure 5 (croissance de la partie aérienne) et de la figure 6 (croissance de la partie racinaire), montrent que le filtrat d'algue seul appliqué en foliaire améliore légèrement la croissance pondérale des plants de tomates comme observé précédemment. Pour ce qui est de l'EXTRAIT, les résultats montrent que, bien qu'appliqué à une dose réduite, il agit encore sur la croissance des plants d'une façon nette, voire supérieure à ce qui avait été observé avec des doses plus fortes.

D'autre part, il n'y a pas de différence significative entre l'effet de l'EXTRAIT appliqué à la dose de 0,375g/l et appliqué à la dose 0,750g/l. De même, l'étude précédente n'a pas montré de différence significative entre les doses 1,5g/l et 3g/l. Il semble que l'efficacité de l'EXTRAIT soit similaire entre ces deux essais, il n'est donc pas nécessaire d'utiliser l'EXTRAIT à de fortes doses.

### 3- Effet sur les teneurs en chlorophylles des plants

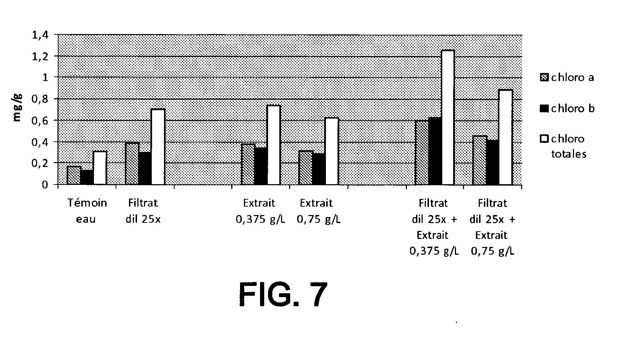

Les prélèvements foliaires sont broyés dans de l'azote puis dans une solution de tampon phosphate et l'on dose ensuite les chlorophylles a, b et totales dans de l'acétone 80% (v/v). Elles sont quantifiées au spectrophotomètre DO645nm, D0652nm et D0663nm. Les résultats sont présentés sur le diagramme de la figure 7.

Le filtrat d'algue et l'EXTRAIT améliorent la teneur en chlorophylles d'une façon similaire lorsqu'ils sont appliqués seuls. Lorsqu'ils sont couplés, un effet synergique des deux produits sur les teneurs en chlorophylles des plants, est observé, contrairement à ce qui avait été observé pour des doses d'EXTRAIT supérieures.

### Conclusion :

Cet exemple confirme les résultats précédents et met en évidence l'action de l'EXTRAIT sur la croissance de plants de tomate, à faible dose. En effet, même à des doses presque 10 fois inférieures, l'EXTRAIT appliqué en foliaire améliore, de façon significative, la croissance des plants de tomates carencés.

## Revendications

1. Utilisation d'un extrait de marc de raisin comprenant plus de 45% en poids de polyphénols et plus de 0,5% en poids d'anthocyanes, par rapport au poids sec de l'extrait, pour favoriser la croissance de plantes.

2. Utilisation selon la revendication 1, **caractérisée par le fait que** l'extrait comprend plus de 70% en poids de polyphénols par rapport au poids sec de l'extrait.

3. Utilisation selon l'une des revendications 1 et 2, **caractérisée par le fait que** l'extrait comprend plus de 8% en poids d'anthocyanes par rapport au poids sec de l'extrait.

4. Utilisation selon l'une des revendications 1 à 3, **caractérisée en ce que** l'extrait est un extrait hydroalcoolique de marc de raisin ou un extrait obtenu par extraction à l'eau sulfitée.

5. Utilisation selon l'une quelconque des revendications 1 à 4, **caractérisée par le fait que** les plantes sont choisies dans le groupe comprenant les plantes agronomiquement utiles et les plantes ornementales.

6. Procédé pour favoriser la croissance des plantes qui comprend l'application sur lesdites plantes d'une composition comprenant un extrait de marc de raisin comprenant plus de 45% en poids de polyphénols et plus de 0,5% en poids d'anthocyanes, par rapport au poids sec de l'extrait.

7. Procédé selon la revendication 6, **caractérisé par le fait que** la composition est une composition aqueuse qui est appliquée par pulvérisation foliaire ou infiltration.

8. Procédé selon la revendication 6 ou 7, **caractérisé par le fait que** l'extrait comprend plus de 70% en poids de polyphénols par rapport au poids sec de l'extrait

9. Procédé selon l'une quelconque des revendications 6 à 8, **caractérisé par le fait que** l'extrait comprend plus de 8% en poids d'anthocyanes par rapport au poids sec de l'extrait.

10. Procédé selon l'une quelconque des revendications 6 à 9, **caractérisé par le fait que** la composition comprend un filtrat d'algue.

## Patentansprüche

1. Verwendung eines Traubentresterextrakts, umfassend mehr als 45 Gew.-% Polyphenole und mehr als 0,5 Gew.-% Anthocyane, bezogen auf das Trockengewicht des Extrakts, zur Förderung des Pflanzenwachstums.

2. Verwendung gemäß Anspruch 1, **dadurch gekennzeichnet, dass** der Extrakt mehr als 70 Gew.-% Polyphenole, bezogen auf das Trockengewicht des Extrakts, umfasst.

3. Verwendung gemäß einem der Ansprüche 1 und 2, **dadurch gekennzeichnet, dass** der Extrakt mehr als 8 Gew.-% Anthocyane, bezogen auf das Trockengewicht des Extrakts, umfasst.

4. Verwendung gemäß einem der Ansprüche 1 bis 3, **dadurch gekennzeichnet, dass** der Extrakt ein wässrig-alkoholischer Traubentresterextrakt oder ein Extrakt, erhalten durch Extraktion in Sulfitwasser, ist.

5. Verwendung gemäß einem der Ansprüche 1 bis 4, **dadurch gekennzeichnet, dass** die Pflanzen ausgewählt sind aus der Gruppe bestehend aus landwirtschaftlichen Nutzpflanzen und Zierpflanzen.

6. Verfahren zur Förderung des Pflanzenwachstums, welches das Aufbringen einer Zusammensetzung umfassend einen Traubentresterextrakt auf die Pflanzen umfasst, der mehr als 45 Gew.-% Polyphenole und mehr als 0,5 Gew.-% Anthocyane, bezogen auf das Trockengewicht des Extrakts, umfasst.

7. Verfahren gemäß Anspruch 6, **dadurch gekennzeichnet, dass** die Zusammensetzung eine wässrige Zusammensetzung ist, die durch Blattspritzung oder Infiltration aufgebracht wird.

8. Verfahren gemäß Anspruch 6 oder 7, **dadurch gekennzeichnet, dass** der Extrakt mehr als 70 Gew.-% Polyphenole, bezogen auf das Trockengewicht des Extrakts, umfasst.

9. Verfahren gemäß einem der Ansprüche 6 bis 8, **dadurch gekennzeichnet, dass** der Extrakt mehr als 8 Gew.-% Anthocyane, bezogen auf das Trockengewicht des Extrakts, umfasst.

10. Verfahren gemäß einem der Ansprüche 6 bis 9, **dadurch gekennzeichnet, dass** die Zusammensetzung ein Algenfiltrat umfasst.

## Claims

1. The use of an extract of grape marc comprising more than 4 5 wt% of polyphenols and more than 0,5 wt% of anthocyans relative to the dry weight of the extract, for promoting plant growth.

2. The use according to claim 1, **characterized in that** the extract comprises more than 70 wt% of polyphenols relative to the dry weight of the extract.

3. The use according to claims 1 and 2, **characterized in that** the extract comprises more than 8 wt% of anthocyans relative to the dry weight of the extract.

4. The use according to any one of claims 1 to 3, **characterized in that** the extract is an aqueous-alcoholic extract of grape marc or an extract obtained by extraction with sulfited water.

5. The use according to any one of claims 1 to 4, **characterized in that** the plants are selected from the group comprising agronomically useful plants and ornamental plants.

6. A method for promoting plant growth, which comprises the application on said plants of a composition comprising an extract of grape marc comprising more than 45 wt% of polyphenols and more than 0.5 wt% of anthocyans relative to the dry weight of the extract.

7. The method according to claim 6, **characterized in that** the composition is an aqueous composition that is applied by foliar spraying or infiltration.

8. The method according to claim 6 or 7, **characterized in that** the extract comprises more than 70 wt% of polyphenols relative to the dry weight of the extract

9. The method according to any one of claims 6 to 8, **characterized in that** the extract comprises more than 8 wt% of anthocyans relative to the dry weight of the extract.

10. The method according to any one of claims 6 to 9, **characterized in that** the composition comprises an algal filtrate.
